# EUROPEAN PATENT APPLICATION

(11) **EP 4 576 294 A1**
(43) Date of publication of application: **25.06.2025**
(21) Application number: 24221391.6
(22) Date of filing: 19.12.2024
(51) Int. Cl.: H01M 10/04, H01M 10/0525, H01M 10/0587, H01M 50/107, H01M 50/533, H01M 50/538, H01M 50/55, H01M 50/559

(54) **BATTERY CELL AND ELECTRODE ASSEMBLY**

(30) Priority: 20.12.2023 KR 20230186760; 26.04.2024 KR 20240056157
(71) Applicant: SK On Co., Ltd., Seoul 03161 (KR)
(72) Inventor: KWAK, Seung Ho, Daejeon 34124 (KR); JU, Seung Hoon, Daejeon 34124 (KR)
(74) Representative: Prüfer & Partner mbB Patentanwälte · Rechtsanwälte

(57) **Abstract**

An embodiment of the present disclosure may provide a battery cell including an electrode assembly in which a first electrode including a first uncoated part, a second electrode including a second uncoated part, and a separator disposed between the first electrode and the second electrode are wound in a roll shape, and a cylindrical case including an opening with one side open, and configured to accommodate the electrode assembly inside through the opening, where the first uncoated part and the second uncoated part are disposed in a direction of the opening.

## Description

### BACKGROUND OF THE INVENTION

### 1. Field

Embodiments of the present disclosure relate to a battery cell and an electrode assembly.

### 2. Description of the Related Art

As the development of electric vehicles, energy storage batteries, robots, satellites, etc., becomes more active, research on high-performance rechargeable secondary batteries as an energy source is being actively conducted.

Currently commercialized secondary batteries include nickel-cadmium batteries, nickel-metal hydride batteries, nickel-zinc batteries, and lithium secondary batteries. Among these, lithium secondary batteries (hereinafter referred to as lithium-ion batteries or lithium batteries) have the advantages of being nearly free from memory effect compared to nickel-based secondary batteries, allowing flexible charging and discharging, exhibiting a very low self-discharge rate, and having a high energy density.

Types of lithium secondary batteries include cylindrical, square, and pouch type battery cells. Among these, a cylindrical battery cell forms a jellyroll-type electrode assembly by interposing a separator, which is an insulator, between a cathode and an anode and winding them, and constructs the battery by inserting this along with an electrolyte into a cylindrical case.

Conventional cylindrical battery cells used a structure in which strip-shaped electrode tabs are connected to an uncoated part of the cathode and an uncoated part of the anode, respectively, and the electrode tabs are connected to electrode terminals and a case. Battery cells with this structure had problems in that current is concentrated on the strip-shaped electrode tabs connected to the cathode uncoated part and/or the anode uncoated part, resulting in high resistance, high heat generation, and poor current collection efficiency.

In order to solve the above problems, a tab-less battery cell has been proposed in which the cathode uncoated part and the anode uncoated part are disposed at the upper end and lower end of a jellyroll-type electrode assembly, respectively, and a collector plate is welded to the uncoated part. However, in the case of a tab-less battery cell, the manufacturing process is complicated and the difficulty of assembly is high, as collector plates are welded to the upper end and lower end of the electrode assembly, respectively, and a hole is formed in the case to connect the cathode to an external terminal. In addition, welding defects are likely to occur due to the high difficulty of welding, and in this case, a problem in which the resistance of the cell increases may occur.

### SUMMARY OF THE INVENTION

One of the many tasks of the present disclosure is to provide a battery cell and an electrode assembly capable of lowering the resistance of the cell.

One of the many tasks of the present disclosure is to provide a battery cell and an electrode assembly capable of maximizing the capacity of the cell.

One of the many tasks of the present disclosure is to provide a battery cell and an electrode assembly capable of simplifying the manufacturing process of the cell.

An embodiment of the present disclosure may provide a battery cell including: an electrode assembly in which a first electrode including a first uncoated part, a second electrode including a second uncoated part, and a separator disposed between the first electrode and the second electrode are wound in a roll shape; and a cylindrical case including an opening with one side open, and configured to accommodate the electrode assembly inside through the opening, where the first uncoated part and the second uncoated part are disposed in a direction of the opening.

In an embodiment of the present disclosure, the electrode assembly of the battery cell may include a first region located within a predetermined first radius from a center of a winding center and a second region located outside the first region, the first uncoated part may be disposed in the first region, and the second uncoated part may be disposed in the second region.

In an embodiment, a size of the first radius of the battery cell may be 10% or more and 80% or less of a size of the radius of the electrode assembly.

In an embodiment of the present disclosure, each of the first uncoated part and the second uncoated part of the battery cell may include a plurality of cut parts formed in the direction of the opening and a plurality of flags partitioned by the cut parts.

In an embodiment of the present disclosure, the first uncoated part and the second uncoated part of the battery cell may be bent toward a winding center of the electrode assembly.

Here, the first uncoated part and the second uncoated part may be bent toward the winding center while being spaced apart from each other.

In an embodiment, the battery cell according to the present disclosure may further include an insulator disposed between the bent first uncoated part and the bent second uncoated part.

In an embodiment of the present disclosure, the battery cell according to the present disclosure may further include a disk-shaped first electrode collector plate disposed on the first region, and a ring-shaped second electrode collector plate disposed on the second region, wherein the first electrode collector plate may be disposed so as to be spaced apart from the second electrode collector plate in a hollow region of the second electrode collector plate.

In an embodiment of the present disclosure, the first electrode collector plate of the battery cell may include a penetration hole penetrating along a central axis.

In an embodiment, the second electrode collector plate and the case of the battery cell according to the present disclosure may be electrically connected by contacting each other.

In an embodiment of the present disclosure, when a region wound from a winding center of the electrode assembly to the first uncoated part of the battery cell is referred to as a first spacing region (d₁), a length of the first spacing region (d₁) may be 200 mm or less.

In an embodiment of the present disclosure, when a region wound from one end of the first uncoated part to the second uncoated part of the battery cell is referred to as a second spacing region (d₂), a length of the second spacing region (d₂) may be 300 mm or less.

Another embodiment of the present disclosure may provide an electrode assembly including a first electrode including a first uncoated part, a second electrode including a second uncoated part, and a separator disposed between the first electrode and the second electrode, which is wound in a roll shape, where the first uncoated part and the second uncoated part of the electrode assembly are disposed in a same direction, the electrode assembly includes a first region located within a predetermined first radius from a center of a winding center and a second region located outside the first region, the first uncoated part is disposed in the first region, and the second uncoated part is disposed in the second region.

In an embodiment of the present disclosure, a size of the first radius of the battery assembly may be 10% or more and 80% or less of a size of the radius of the electrode assembly.

In an embodiment of the present disclosure, when a region wound from a winding center of the electrode assembly according to the present disclosure to the first uncoated part is referred to as a first spacing region (d₁), and when a region wound from one end of the first uncoated part to the second uncoated part is referred to as a second spacing region (d₂), a length of the first spacing region (d₁) may be 200 mm or less, and a length of the second spacing region (d₂) may be 300 mm or less.

One of the many effects of the present disclosure is that it may provide a battery cell and an electrode assembly capable of lowering the resistance of the cell.

One of the many effects of the present disclosure is that it may provide a battery cell and an electrode assembly capable of maximizing the capacity of the cell.

One of the many effects of the present disclosure is that it may provide a battery cell and an electrode assembly capable of simplifying the manufacturing process of the cell.

The battery cell and electrode assembly according to the present disclosure may be widely applied in green technology fields, such as electric vehicles, battery charging stations, and other solar power generation and wind power generation using batteries. In addition, the battery cell and electrode assembly of the present disclosure may be used in eco-friendly electric vehicles, hybrid vehicles, etc., to prevent climate change by suppressing air pollution and greenhouse gas emissions.

However, the various and beneficial advantages and effects of the present disclosure are not limited to the above-described contents, and will be more easily understood in the process of describing specific embodiments of the present disclosure.

### BRIEF DESCRIPTION OF THE DRAWINGS

FIG. 1 is an exploded perspective view schematically illustrating a battery cell according to an embodiment of the present disclosure.
FIG. 2 is a perspective view schematically illustrating an electrode assembly of FIG. 1.
FIG. 3 is an exploded perspective view of FIG. 2.
FIG. 4 is a plan view schematically illustrating an electrode assembly of a battery cell according to the present disclosure.
FIG. 5 is an exploded plan view of FIG. 4.
FIG. 6 is a cross-sectional view schematically illustrating a battery cell according to an embodiment of the present disclosure.

### DETAILED DESCRIPTION

Before explaining the present disclosure in more detail, terms used herein are defined.

As used herein, the expressions such as "has," "may have," "includes," or "may include" indicate the presence of a given feature (e.g., a number, a function, an operation, or a component such as a part) and do not exclude the presence of additional features.

As used herein, the expressions such as "A or B," "at least one of A or/and B," or "one or more of A or/and B" may include all possible combinations of the listed items. For example, "A or B," "at least one of A and B," or "at least one of A or B" may refer to all of (1) including at least one A, (2) including at least one B, or (3) including both at least one A and at least one B.

In the present specification, the term battery may be used with the same meaning as cell, and the battery or cell may be a general term for a battery cell, which is a unit thereof, and a battery module or battery pack including the battery cell.

In the present disclosure, the term electrode may be a term encompassing both a cathode and an anode. In the present disclosure, the term current collector may be a term encompassing both a cathode current collector and an anode current collector. In addition, in the present disclosure, the term active material layer may be a term encompassing both a cathode active material layer and an anode active material layer. In addition, in the present disclosure, the term active material may be a term encompassing both a cathode active material and an anode active material. In addition, in the present disclosure, the term uncoated part may be a term encompassing both a cathode uncoated part and an anode uncoated part.

In the drawings, an X direction may be defined as a first direction, an L direction, or a length direction, a Y direction as a second direction, a W direction, or a width direction, and a Z direction as a third direction, a T direction, or a thickness direction.

Hereinafter, embodiments of the present disclosure will be described with reference to specific embodiments and the attached drawings. It should be understood that this is not intended to limit the technology described in the present specification to specific embodiments, but rather includes various modifications, equivalents, and/or alternatives of the embodiments of the present disclosure. In connection with the description of the drawings, similar reference numerals may be used for similar components.

In addition, in order to clearly describe the present disclosure in the drawings, parts that are not related to the description are omitted, and the thickness is enlarged to clearly express various layers and regions, and components having the same function within the scope of the same idea may be described using the same reference numerals.

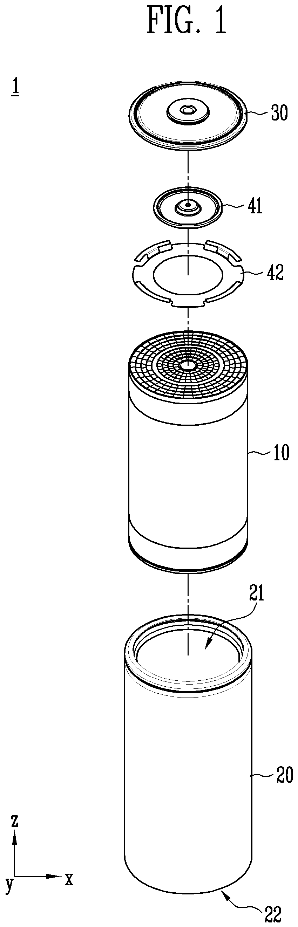

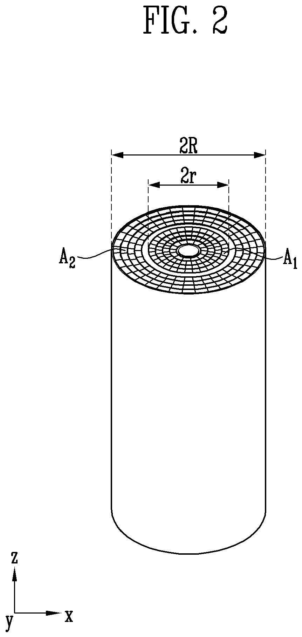

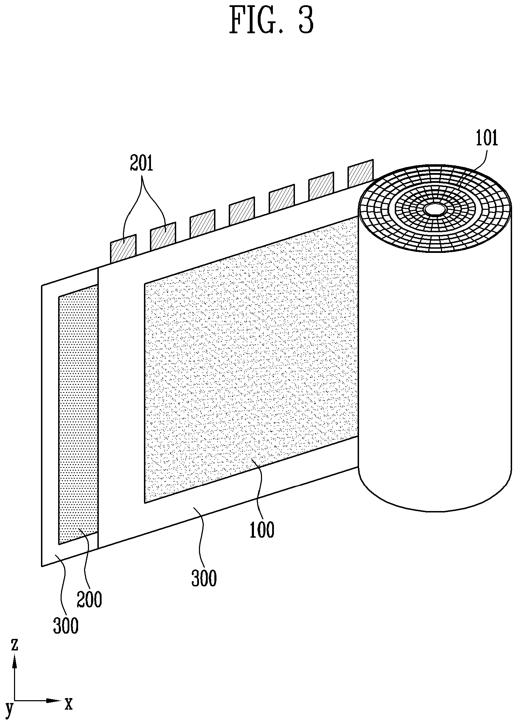

Embodiments of the present disclosure relate to a battery cell. FIG. 1 is an exploded perspective view schematically illustrating a battery cell according to an embodiment of the present disclosure, and FIGS. 2 and 3 are schematic perspective views of an electrode assembly of the battery cell. Referring to FIGS. 1 to 3, a battery cell 1 according to an embodiment of the present disclosure may include an electrode assembly 10 in which a first electrode 100 including a first uncoated part 101, a second electrode 200 including a second uncoated part 201, and a separator 300 disposed between the first electrode 100 and the second electrode 200 are wound in a roll shape; and a cylindrical case 20 including an opening 21 with one side open, and configured to accommodate the electrode assembly 10 therein through the opening 21.

Here, the first uncoated part 101 and the second uncoated part 201 of the electrode assembly 10 may be disposed in a direction of the opening 21.

A battery cell using a cylindrical case uses an electrode assembly manufactured by laminating a cathode, a separator, and an anode and winding them. A typical cylindrical battery cell has a structure in which a cathode tab attached to a cathode uncoated part is drawn out to the upper part of the electrode assembly, and an anode tab attached to an anode uncoated part is drawn out to the lower part of the electrode assembly. A tab-less cell that has improved this structure has a structure in which a cathode uncoated part is drawn out to the upper part of the electrode assembly, an anode uncoated part is drawn out to the lower part of the electrode assembly, and a cathode collector plate is welded on the cathode uncoated part of the upper part of the electrode assembly, and an anode collector plate is welded on the anode uncoated part of the lower part of the electrode assembly.

A battery cell with the above structure is manufactured by welding and connecting the cathode collector plate welded to the upper part of the electrode assembly to the cathode terminal again, and welding and connecting the anode collector plate welded to the lower part of the electrode assembly to a cap plate and a case. However, if such multiple welding and connecting processes are performed on both the upper and lower parts of the battery cell, the manufacturing process of the cell becomes complicated and the difficulty of welding increases. In addition, if a defect occurs during the welding process of the upper and lower parts, a problem of increased resistance of the cell may occur. On the other hand, the battery cell 1 according to the present disclosure has a structure in which both the first uncoated part 101 and the second uncoated part 201 of the electrode assembly 10 are disposed in the direction of the opening 21 of the case 20, thereby simplifying the manufacturing process. In addition, the resistance of the cell may be reduced by simplifying the cell structure.

An electrode assembly of a battery cell according to an embodiment of the present disclosure may include a first region (A₁) located within a predetermined first radius (r) from a center of a winding center and a second region (A₂) located outside the first region (A₁), the first uncoated part 101 may be disposed in the first region (A₁), and the second uncoated part 201 may be disposed in the second region (A₂).

Referring to FIG. 2, the electrode assembly 10 of the battery cell 1 according to the present disclosure may include a first region (A₁) within a first radius (r) from a winding center and a second region (A₂) located outside the first region (A₁). The first region (A₁) may refer to a region where the first uncoated part 101 is disposed, may refer to a region where the first uncoated part 101 is drawn out from the electrode assembly 10, and may refer to a region located at the winding center. In addition, the second region (A₂) may refer to a region where the second uncoated part 201 is disposed, may refer to a region where the second uncoated part 201 is drawn out from the electrode assembly 10, and may refer to a region on the outer edge side of the electrode assembly 10.

As shown in FIG. 2, the first region (A₁) may have a disk shape, and the second region (A₂) may have a ring shape, and the first region (A₁) may be disposed in the inner hollow of the second region (A₂), but is not limited thereto. The battery cell according to the present disclosure is configured such that the first uncoated part 101 and the second uncoated part 201 of the electrode assembly are respectively drawn out together to one side of the electrode assembly 10 through the first region (A₁) and the second region (A₂), so that the first pole and the second pole may be disposed on a same surface of the electrode assembly.

In an embodiment, the size of the first radius of the battery cell may be within 10% or more and 80% or less of the size of the radius of the electrode assembly. Referring to FIG. 2, when the radius of the electrode assembly is R, the size (r) of the first radius of the first region (A₁) may be within a range of 0.1 × R or more and/or 0.8 × R or less. The size of the first radius (r) may be 0.1 × R or more, 0.15 × R or more, 2.0 × R or more, 2.5 × R or more, or 3.0 × R or more, and may be 0.8 × R or less, 0.75 × R or less, 0.7 × R or less, 0.65 × R or less, or 0.6 × R or less, but is not limited thereto. When the size of the first radius (r) of the battery cell according to the present disclosure satisfies the above range, both the first electrode 100 and the second electrode 200 may secure a sufficient contact area with the electrode collector plate described below to lower the resistance of the cell.

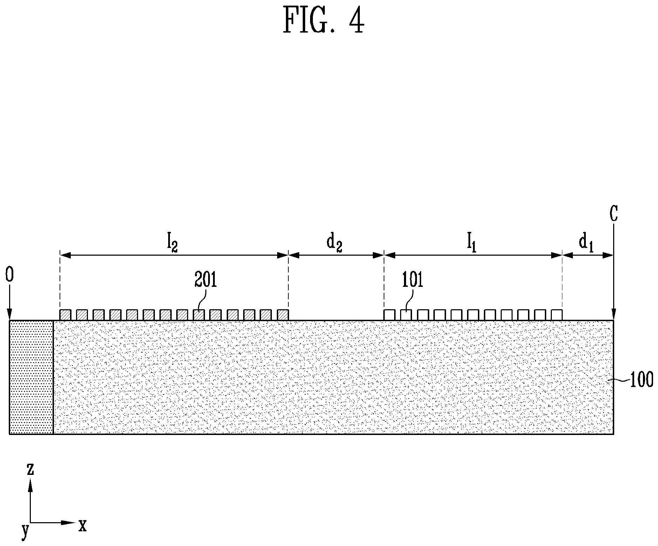

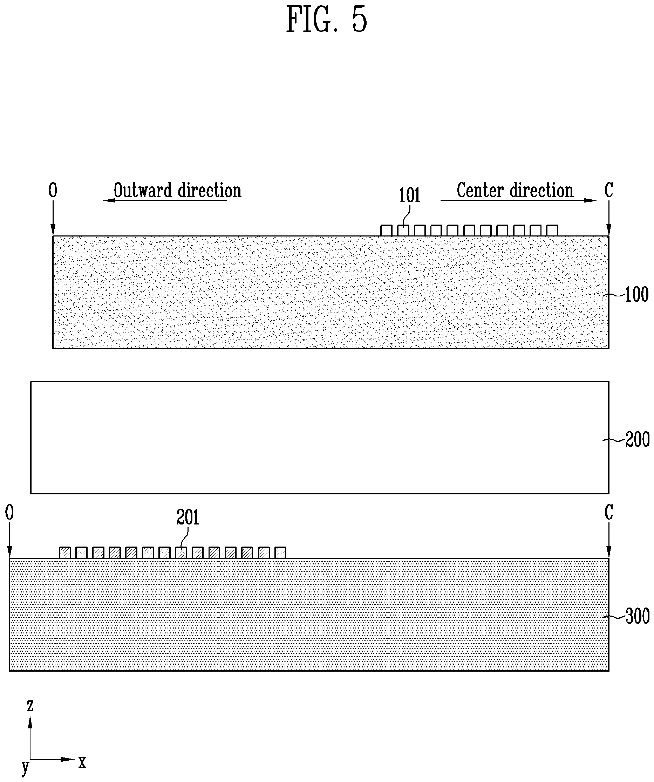

The electrode assembly 10 of the battery cell according to the present disclosure may include a laminate having the first electrode 100 including the first uncoated part 101, the second electrode 200 including the second uncoated part 201, and the separator 300 disposed between the first electrode 100 and the second electrode 200. FIGS. 4 and 5 are schematic diagrams for explaining a laminate of an electrode assembly of a battery cell according to an embodiment of the present disclosure. Referring to FIGS. 4 and 5, the laminate of the electrode assembly may have a structure in which a first electrode 100, a separator 300, and a second electrode 200 are laminated.

The first electrode may include a first current collector, a first active material layer, and a first uncoated part. The first current collector may be a metal foil such as copper, aluminum, etc., but is not limited thereto. The first active material layer may be formed on at least one surface of the first current collector, and may be disposed in contact with the first current collector.

The first uncoated part may mean a region on the first current collector of the first electrode where the first active material layer is not disposed. The first uncoated part may be disposed on at least one of the two long sides of the first electrode, but is not limited thereto. The first uncoated part may perform a role of an electrode tab connected to the first electrode collector plate described below.

The separator may mean a film that physically separates the first electrode and the second electrode. The separator may be an insulating film and may include a polymer film or a porous non-woven fabric, etc., but is not limited thereto.

The second electrode may include a second current collector, a second active material layer, and a second uncoated part. The second current collector may be a metal foil such as copper, aluminum, etc., but is not limited thereto. The second active material layer may be formed on at least one surface of the second current collector and may be disposed in contact with the second current collector.

The second uncoated part may mean a region on the second current collector of the second electrode where the second active material layer is not disposed. The second uncoated part may be disposed on at least one of the two long sides of the second electrode, but is not limited thereto. The second uncoated part may serve as an electrode tab connected to a second electrode collector plate described below.

In an embodiment, the first electrode of the battery cell according to the present disclosure may be a cathode, and the second electrode may be an anode, but is not limited thereto.

The first uncoated part 101 and the second uncoated part 201 of the electrode assembly 10 of the battery cell 1 according to the present disclosure may be disposed on the same surface of the electrode assembly 10. The fact that the first uncoated part 101 and the second uncoated part 201 are disposed on the same surface of the electrode assembly 10 may mean that the first uncoated part 101 and the second uncoated part 201 are disposed toward a same direction. For example, as illustrated in FIG. 4, the first uncoated part 101 and the second uncoated part 201 may both be disposed in the z-axis direction, but are not limited thereto. In addition, in a state where the electrode assembly 10 is accommodated inside the case 20, the first uncoated part 101 and the second uncoated part 201 may be disposed toward the opening 21 of the case 20.

In an embodiment, the first uncoated part 101 and the second uncoated part 201 of the battery cell 1 according to the present disclosure may be disposed to protrude on the same surface of the electrode assembly 10. Referring to FIGS. 4 and 5, the first uncoated part 101 may extend from the first electrode 100 and protrude toward any one surface of the electrode assembly 10, and the second uncoated part 201 may extend from the second electrode 200 and protrude toward the said surface of the electrode assembly 10. The protruding first and second uncoated parts may be disposed to protrude from the electrode assembly toward the same direction.

In an embodiment of the present disclosure, the electrode assembly of the battery cell may include a first spacing region (d₁), a first uncoated part region (l₁), a second spacing region (d₂), and a second uncoated part region (lz) that are disposed sequentially from one end part to the other end part. Referring to FIG. 4, a region wound from one end part of the laminate of the battery cell, for example, a winding center (C), toward the other end part, for example, a winding end (O), to the first uncoated part 101 may be referred to as a first spacing region (d₁), and a region wound from one end of the first uncoated part 101 to the second uncoated part 201 may be referred to as a second spacing region (d₂). In addition, a region where the first uncoated part 101 is disposed between the first spacing region (d₁) and the second spacing region (d₂) may be referred to as a first uncoated part region (l₁), and a region formed from the second spacing region (d₂) toward the winding end (O) and where the second uncoated part 201 is arranged may be referred to as a second uncoated part region (l₂). Here, the first spacing region (d₁), the first uncoated part region (l₁), the second spacing region (d₂), and the second uncoated part region (l₂) may be disposed sequentially.

The first spacing region (d₁) may be a region that forms a hollow in the core part when the laminate is wound. The battery cell according to the present disclosure includes a wound electrode assembly, and a hollow may be formed in the core part during the process of winding the electrode assembly into a cylindrical shape. Here, the first uncoated part 101 may be formed to be spaced apart from the winding center by a predetermined distance so as not to cover the hollow, and the region spaced apart by the predetermined distance may become the first spacing region (d₁). In this case, the first uncoated part 101 may not protrude from the first spacing region (d₁).

In an embodiment, the length of the first spacing region (d1) of the electrode assembly 10 of the battery cell 1 according to the present disclosure may be 200 mm or less. The length of the first spacing region (d₁) may be 200 mm or less, 190 mm or less, 180 mm or less, 170 mm or less, 160 mm or less, or 150 mm or less. In addition, the length of the first spacing region (d₁) may be 0 mm or more, more than 0 mm, 1 mm or more, 2 mm or more, 3 mm or more, 4 mm or more, or 5 mm or more, but is not limited thereto. When the length of the first spacing region (d₁) satisfies the above range, a hollow of an appropriate size may be formed when the laminate is wound, and an electrolyte injected through the hollow may be uniformly impregnated into the entire area of the electrode assembly.

In an embodiment of the present disclosure, the length of the first uncoated part region (l₁) of the electrode assembly of the battery cell according to the present disclosure may be in a range of 5 mm or more and/or 1000 mm or less. When the length of the first uncoated part region (l) satisfies the above range, the first region (A₁) of the wound electrode assembly may be made to have a sufficient area, and as described below, the resistance of the cell may be reduced by making contact with the first electrode collector plate through a large area.

In another embodiment, the length of the second spacing region (d₂) of the electrode assembly of the battery cell according to the present disclosure may be within a range of 300 mm or less. The length of the second spacing region (d₂) may be 300 mm or less, 290 mm or less, 280 mm or less, 270 mm or less, 260 mm or less, or 250 mm or less, but is not limited thereto. In addition, the length of the second spacing region (d₂) may be 0 mm or more, more than 0 mm, 1 mm or more, 2 mm or more, 3 mm or more, 4 mm or more, or 5 mm or more, but is not limited thereto. The second spacing region (d₂) may play a role in spacing the first uncoated part 101 and the second uncoated part 201 apart from each other in the wound electrode assembly 10. If the size of the second spacing region (d₂) is too small, the first uncoated part 101 and the second uncoated part 201 may come into contact with each other, resulting in a short circuit of the electrode. In addition, if the size of the second spacing region (d₂) is too large, the first region (A₁) and the second region (A₂) may not secure a sufficient area, thereby increasing the resistance of the cell.

In an embodiment of the present disclosure, the length of the second uncoated part region (lz) of the electrode assembly of the battery cell according to the present disclosure may be in a range of 5 mm or more and/or 1000 mm or less. When the size of the second uncoated part region (l₂) satisfies the above range, the second region (A₂) of the wound electrode assembly 10 may be made to have a sufficient area, and as described below, the resistance of the cell may be reduced by making contact with the second electrode collector plate through a large area.

In an embodiment of the present disclosure, the first uncoated part and the second uncoated part of the battery cell may each include a plurality of cut parts formed in the direction of the opening and a plurality of flags partitioned by the cut parts. Referring to FIGS. 4 and 5, the first uncoated part and the second uncoated part may each include flags disposed on both sides of the cut part based on the cut part, and such cut parts may be included in a plurality. In FIGS. 4 and 5, the cut part is illustrated as having a rectangular shape having an area, but is not limited thereto, and may have, for example, a shape of a cutting line. Since the first uncoated part and the second uncoated part each have a plurality of flags, when the uncoated part is bent as described below, stress during the bending process may be dispersed. This may prevent the bent uncoated part from being lifted or torn.

In an embodiment of the present disclosure, the first uncoated part 101 and the second uncoated part 201 of the battery cell 1 may be bent toward the winding center (C) of the electrode assembly 10. The first uncoated part 101 and the second uncoated part 201 may be bent while the electrode assembly 10 is wound, or may be bent simultaneously with the winding. The first uncoated part 101 of the wound electrode assembly 10 may be bent toward the winding center axis of the electrode assembly 10 to form the first region (A₁) described above, and the second uncoated part 201 bent toward the center axis may form the second region (A₂) described above.

In an embodiment, the first uncoated part 101 and the second uncoated part 201 of the battery cell 1 according to the present disclosure may be bent toward the winding center of the electrode assembly 10, while being spaced apart from each other. The first uncoated part 101 and the second uncoated part 201 may be bent toward the winding center as described above to form the first region (A₁) and the second region (A₂), respectively. Here, the bent first uncoated part 101 and the second uncoated part 201 may be disposed to be spaced apart from each other, and the first region (A₁) and the second region (A₂) formed by the bent first uncoated part 101 and the second uncoated part 201, respectively, may be disposed to be spaced apart from each other.

In an embodiment of the present disclosure, the battery cell 1 according to the present disclosure may further include an insulator (not shown) disposed between the bent first uncoated part 101 and the bent second uncoated part 201. The insulator may be disposed between the first region (A₁) formed by the bent first uncoated part 101 and the second region (A₂) formed by the bent second uncoated part 201. The insulator may include a material having electrical insulation properties, and may include, for example, a polymer material or a ceramic material, but is not limited thereto. The insulator may have, for example, a ring shape, and may serve to electrically separate the first uncoated part 101 and the second uncoated part 201, and may serve to electrically separate the first region (A₁) and the second region (A₂) described above.

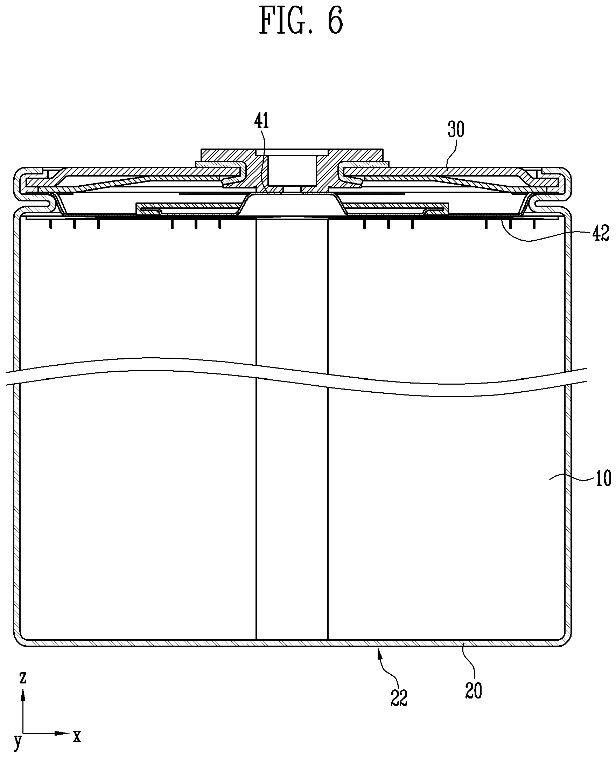

In an embodiment, the battery cell 1 according to the present disclosure may further include a disk-shaped first electrode collector plate 41 disposed on the first region (A₁) and a ring-shaped second electrode collector plate 42 disposed on the second region (A₂). Referring to FIG. 6, the second electrode collector plate 42 may be disposed on the outer side of the first electrode collector plate 41. Here, the first electrode collector plate 41 may be disposed in the hollow region of the second electrode collector plate 42 to be spaced apart from the second electrode collector plate 42. The first electrode collector plate 41 and the second electrode collector plate 42 may be made of a metal material such as aluminum, copper, etc., but are not limited thereto. As described above, when the battery cell 1 according to the present disclosure further includes an insulator disposed between the bent first uncoated part 101 and the bent second uncoated part 201, the insulator may be disposed between the first region (A₁) and the second region (A₂).

In another embodiment, when the battery cell 1 according to the present disclosure includes the first electrode collector plate 41, the first electrode collector plate 41 may include a penetration hole extending along the central axis. The penetration hole may be disposed in the central part of the first electrode collector plate 41 and may be disposed at a location corresponding to the hollow of the core part of the electrode assembly 10 described above. The penetration hole may function as an injection hole for injecting an electrolyte in a process of manufacturing the battery cell.

In an embodiment of the present disclosure, when the battery cell 1 according to the present disclosure includes a second electrode collector plate 42, the second electrode collector plate 42 and the case 20 may be electrically connected by contacting each other. The second electrode collector plate 42 may have a ring-shaped structure and may have a structure in which it directly contacts the case 20 in the outward direction of the ring-shaped structure.

In another embodiment, the battery cell 1 according to the present disclosure may further include a connecting member (not shown) disposed between the second electrode collector plate 42 and the case 20. When the battery cell (1) according to the present disclosure further includes a connecting member (not shown), the second electrode collector plate 42 and the case 20 may be electrically connected through the connecting member (not shown).

The battery cell 1 according to the present disclosure may include a cylindrical case 20 including an opening 21 with one side open and configured to accommodate the electrode assembly 10 therein through the opening 21. Referring to FIGS. 1 and 6, the case 20 may include, for example, the opening 21 only at one end part, may include a closed part 22 at a location opposite to the opening 21, and may not have a penetrating part other than the opening 21. In this case, the case 20 may have a structure in which an area other than the opening 21 is closed. The opening 21 may be an area into which the electrode assembly 10 described above is loaded. The electrode assembly 10 wound through the opening 21 may be accommodated inside the case.

In the case of using a conventional cylindrical case, a structure was applied in which a penetration hole was formed at an end part opposite to the opening, and a cathode terminal was drawn out through the penetration hole. The above-described structure has a limitation in that the manufacturing process is complicated because both the upper and lower parts of the case need to be processed. In addition, if only one opening is used, the electrode collector plate at the lower part of the closed case and the case must be connected by a method other than welding, and a problem may occur in that stable contact is not implemented, resulting in increased resistance of the cell. On the other hand, the battery cell according to the present disclosure uses a case having a structure in which an opening is formed on one surface, and an area other than the opening is closed, and has a structure in which both the first electrode uncoated part and the second electrode uncoated part of the electrode assembly, which are loaded into the opening, are disposed toward the opening, so that electrodes of the two poles may be connected in one direction, which may simplify the manufacturing process.

In an embodiment, the battery cell 1 according to the present disclosure may further include a cap plate 30 disposed on the opening 21 of the case 20. The cap plate 30 may perform a function of sealing the opening 21 of the case 20.

The cap plate 30 may include an electrode terminal disposed at a central part. The electrode terminal may be electrically connected to the first electrode 100 described above. One end part of the electrode terminal may be connected to the first electrode collector plate 41 by penetrating the central part of the cap plate. In addition, the electrode terminal and the first electrode collector plate 41 may be connected by being in direct contact, or may be electrically connected through a separate connecting electrode, but are not limited thereto. The other end part of the electrode terminal connected to the first electrode collector plate 41 may be disposed to protrude outwardly of the cap plate and may function as an external terminal.

When the battery cell according to the present disclosure includes an electrode terminal, the cap plate 30 may further include an insulator disposed between the electrode terminal and the cap plate 30. The insulator may be disposed to cover the first electrode collector plate 41 described above, and may prevent the first electrode collector plate 41 from contacting the case 20 and/or the second electrode collector plate 42 with each other to cause a short circuit.

The case 20 of the battery cell 1 according to the present disclosure may have a beading part formed at an end part on the opening 21 side, and the electrode assembly of the battery cell may be fixed by the beading part.

Some of the aspects of the present disclosure are as follows:
Aspect 1: A battery cell (1) comprising:
   an electrode assembly (10) in which a first electrode (100) comprising a first electrode (101), a second electrode (200) comprising a second uncoated part (201), and a separator (300) disposed between the first electrode (100) and the second electrode (200) are wound in a roll shape; and
   a cylindrical case (20) comprising an opening (21) with one side open, and configured to accommodate the electrode assembly (10) therein through the opening (21),
   wherein the first electrode (101) and the second uncoated part (201) are disposed in a direction of the opening (21).
Aspect 2: The battery cell (1) according to claim 1, wherein the electrode assembly (10) comprises a first region (A₁) located within a predetermined first radius (r) from a center of a winding center (C) and a second region (A₂) located outside the first region (A₁),
   the first electrode (101) is disposed in the first region (A₁), and
   the second uncoated part (201) is disposed in the second region (A₂).
Aspect 3: The battery cell (1) according to aspect 2, wherein a size of the first radius (r) is 10% or more and 80% or less of a size of the radius of the electrode assembly (10).
Aspect 4: The battery cell (1) according to any one of the preceding aspects, wherein each of the first electrode (101) and the second uncoated part (201) comprises a plurality of cut parts formed in the direction of the opening (21) and a plurality of flags partitioned by the cut parts.
Aspect 5: The battery cell (1) according to any one of the preceding aspects, wherein the first electrode (101) and the second uncoated part (201) are bent toward a winding center (C) of the electrode assembly (10).
Aspect 6: The battery cell (1) according to aspect 5, wherein the first electrode (101) and the second uncoated part (201) are bent toward the winding center (C) while being spaced apart from each other.
Aspect 7: The battery cell (1) according to aspect 5 or 6, further comprising an insulator disposed between the bent first electrode (101) and the bent second uncoated part (201).
Aspect 8: The battery cell (1) according to any one of aspects 2 to 7, further comprising:
   a disk-shaped first electrode collector plate (41) disposed on the first region (A₁); and
   a ring-shaped second electrode collector plate (42) disposed on the second region (A₂),
   wherein the first electrode collector plate (41) is disposed so as to be spaced apart from the second electrode collector plate (42) in a hollow region of the second electrode collector plate (42).
Aspect 9: The battery cell (1) according to aspect 8, wherein the first electrode collector plate (41) comprises a penetration hole penetrating along a central axis.
Aspect 10: The battery cell (1) according to aspect 8 or 9, wherein the second electrode collector plate (42) and the case (20) are electrically connected by contacting each other.
Aspect 11: The battery cell (1) according to any one of the preceding aspects, wherein, when a region wound from a winding center (C) of the electrode assembly (10) to the first electrode (101) is referred to as a first spacing region (d1),
   a length of the first spacing region (d1) is 200 mm or less.
Aspect 12: The battery cell (1) according to any one of the preceding aspects, wherein, when a region wound from one end of the first electrode (101) to the second uncoated part (201) is referred to as a second spacing region (d2),
   a length of the second spacing region (d2) is 300 mm or less.
Aspect 13: An electrode assembly (10) comprising a first electrode (100) comprising a first electrode (101), a second electrode (200) comprising a second uncoated part (201), and a separator (300) disposed between the first electrode (100) and the second electrode (200), which is wound in a roll shape,
   wherein the first electrode (101) and the second uncoated part (201) of the electrode assembly (10) are disposed in a same direction,
   the electrode assembly (10) comprises a first region (A₁) located within a predetermined first radius (r) from a center of a winding center (C) and a second region (A₂) located outside the first region (A₁),
   the first electrode (101) is disposed in the first region (A₁), and
   the second uncoated part (201) is disposed in the second region (A₂).
Aspect 14: The electrode assembly (10) according to aspect 13, wherein a size of the first radius (r) is 10% or more and 80% or less of a size of the radius of the electrode assembly (10).
Aspect 15: The electrode assembly (10) according to aspect 13 or 14, wherein, when a region wound from a winding center (C) of the electrode assembly (10) to the first electrode (101) is referred to as a first spacing region (d1), and
   a region wound from one end of the first electrode (101) to the second uncoated part (201) is referred to as a second spacing region (d2),
   a length of the first spacing region (d1) is 200 mm or less, and
   a length of the second spacing region (d2) is 300 mm or less.

Although the embodiments of the present disclosure have been described in detail above, the present disclosure is not limited by the above-described embodiments and the accompanying drawings, but is intended to be limited by the appended claims. Accordingly, various forms of substitution, modification, and change may be made by those skilled in the art within the scope that does not depart from the technical idea of the present disclosure described in the claims and will also fall within the scope of the present disclosure.

## Claims

1. A battery cell (1) comprising:
an electrode assembly (10) in which a first electrode (100) comprising a first electrode (101), a second electrode (200) comprising a second uncoated part (201), and a separator (300) disposed between the first electrode (100) and the second electrode (200) are wound in a roll shape; and
a cylindrical case (20) comprising an opening (21) with one side open, and configured to accommodate the electrode assembly (10) therein through the opening (21),
wherein the first electrode (101) and the second uncoated part (201) are disposed in a direction of the opening (21).

2. The battery cell (1) according to claim 1, wherein the electrode assembly (10) comprises a first region (A₁) located within a predetermined first radius (r) from a center of a winding center (C) and a second region (A₂) located outside the first region (A₁),
the first electrode (101) is disposed in the first region (A₁), and
the second uncoated part (201) is disposed in the second region (A₂).

3. The battery cell (1) according to claim 2, wherein a size of the first radius (r) is 10% or more and 80% or less of a size of the radius of the electrode assembly (10).

4. The battery cell (1) according to any one of the preceding claims, wherein each of the first electrode (101) and the second uncoated part (201) comprises a plurality of cut parts formed in the direction of the opening (21) and a plurality of flags partitioned by the cut parts

5. The battery cell (1) according to any one of the preceding claims, wherein the first electrode (101) and the second uncoated part (201) are bent toward a winding center (C) of the electrode assembly (10).

6. The battery cell (1) according to claim 5, wherein the first electrode (101) and the second uncoated part (201) are bent toward the winding center (C) while being spaced apart from each other.

7. The battery cell (1) according to claim 5 or 6, further comprising an insulator disposed between the bent first electrode (101) and the bent second uncoated part (201).

8. The battery cell (1) according to any one of claims 2 to 7, further comprising:
a disk-shaped first electrode collector plate (41) disposed on the first region (A₁); and
a ring-shaped second electrode collector plate (42) disposed on the second region (A₂),
wherein the first electrode collector plate (41) is disposed so as to be spaced apart from the second electrode collector plate (42) in a hollow region of the second electrode collector plate (42).

9. The battery cell (1) according to claim 8, wherein the first electrode collector plate (41) comprises a penetration hole penetrating along a central axis.

10. The battery cell (1) according to claim 8 or 9, wherein the second electrode collector plate (42) and the case (20) are electrically connected by contacting each other.

11. The battery cell (1) according to any one of the preceding claims, wherein, when a region wound from a winding center (C) of the electrode assembly (10) to the first electrode (101) is referred to as a first spacing region (d1),
a length of the first spacing region (d1) is 200 mm or less.

12. The battery cell (1) according to any one of the preceding claims, wherein, when a region wound from one end of the first electrode (101) to the second uncoated part (201) is referred to as a second spacing region (d2),
a length of the second spacing region (d2) is 300 mm or less.

13. An electrode assembly (10) comprising a first electrode (100) comprising a first electrode (101), a second electrode (200) comprising a second uncoated part (201), and a separator (300) disposed between the first electrode (100) and the second electrode (200), which is wound in a roll shape,
wherein the first electrode (101) and the second uncoated part (201) of the electrode assembly (10) are disposed in a same direction,
the electrode assembly (10) comprises a first region (A₁) located within a predetermined first radius (r) from a center of a winding center (C) and a second region (A₂) located outside the first region (A₁),
the first electrode (101) is disposed in the first region (A₁), and
the second uncoated part (201) is disposed in the second region (A₂).

14. The electrode assembly (10) according to claim 13, wherein a size of the first radius (r) is 10% or more and 80% or less of a size of the radius of the electrode assembly (10).

15. The electrode assembly (10) according to claim 13 or 14, wherein, when a region wound from a winding center (C) of the electrode assembly (10) to the first electrode (101) is referred to as a first spacing region (d1), and
a region wound from one end of the first electrode (101) to the second uncoated part (201) is referred to as a second spacing region (d2),
a length of the first spacing region (d1) is 200 mm or less, and
a length of the second spacing region (d2) is 300 mm or less.
